# EUROPEAN PATENT SPECIFICATION

(11) **EP 3 343 060 B1**
(45) Date of publication and mention of the grant of the patent: **30.10.2019**
(21) Application number: 16839042.5
(22) Date of filing: 03.08.2016
(51) Int. Cl.: F16F 9/05, B61F 5/10, F16F 9/32

(54) **AIR SPRING DEVICE**
LUFTFEDERVORRICHTUNG
DISPOSITIF DE RESSORT PNEUMATIQUE

(30) Priority: 25.08.2015 JP 2015165410
(43) Date of publication of application: 04.07.2018
(73) Proprietor: Bridgestone Corporation, Tokyo 104-8340 (JP)
(72) Inventor: TANAKA, Satoshi, Tokyo 104-8340 (JP)
(74) Representative: Oxley, Robin John George
(86) International application number: PCT/JP2016/072832
(87) International publication number: WO 2017/033695

(56) References cited:
- WO-A1-2013/094136
- JP-A- 2003 294 073
- JP-A- 2003 294 073
- JP-A- 2007 127 264
- JP-A- 2012 145 131
- JP-A- 2013 130 248
- US-A- 3 904 181
- US-A1- 2015 211 593

## Description

### [Technical Field]

The present invention relates to an air spring device that is provided, for example, between a vehicle body and a truck of a railway vehicle or the like.

### [Background Art]

Conventionally, air spring devices comprising an upper member and a lower member; and a tubular membrane member, in an interior of which a compressed gas is sealed at atmospheric pressure or higher, having openings, at both ends, respectively coupled to the upper and lower members; wherein the upper member and the lower member respectively comprise contact portions that slidably contact each other when the tubular membrane member is evacuated, are known.

As this type of air spring device, a configuration wherein a disc-shaped holding portion is provided on the lower member, and a contact portion is attached to the entire upper surface of the holding portion, is known, as indicated, for example, in the below-mentioned Patent Document 1. Reference is also made to JP 2003-294073 and US 2005/211593.

### [Related Document]

### [Patent Document]

[Patent Document 1]
JP 2012-177407 A

### [Summary of Invention]

### [Technical Problem]

However, in the aforementioned conventional air spring device, the contact portion is attached to the entire upper surface of the disc-shaped holding portion. For this reason, there was a problem in that even if just part of the contact portion was damaged, the entire holding portion and contact portion had to be exchanged, thus increasing maintenance costs.

The present invention was made in view of the aforementioned circumstances, and has the purpose of providing an air spring device that is able to reduce maintenance costs.

### [Solution to Problem]

The present invention proposes the following means for solving the aforementioned problem.

The air spring device according to the present invention comprises an upper member and a lower member; and a tubular membrane member, in an interior of which a compressed gas is sealed at atmospheric pressure or higher, having openings, at both ends, respectively coupled to the upper and lower members. The upper member and the lower member respectively comprise contact portions that slidably contact each other when the tubular membrane member is evacuated. At least one of the upper member and the lower member comprises a plurality of the contact portions; a plurality of holding portions having the contact portions attached to the front surfaces thereof; and a base portion supporting the rear surfaces of the holding portions. The plurality of holding portions are provided so as to be able to be respectively attached to and detached from the base portion.

### [Advantageous Effects of Invention]

According to the air spring device of the present invention, it is possible to largely reduce maintenance costs.

### [Brief Description of Drawings]

FIG. 1 is a vertical section view of an air spring device according to an embodiment of the present invention.
FIG. 2 is a top view of the lower member constituting the air spring device shown in FIG. 1.
FIG. 3 is a perspective view showing the air spring device shown in FIG. 1, with the contact portions provided on the holding portions.
FIG. 4 is a section view cut at the arrows IV-IV in FIG. 3.
FIG. 5 is a perspective view showing the holding portions in the air spring device shown in FIG. 1.

### [Description of Embodiments]

Hereinbelow, an air spring device according to an embodiment of the present invention will be explained with reference to the drawings.

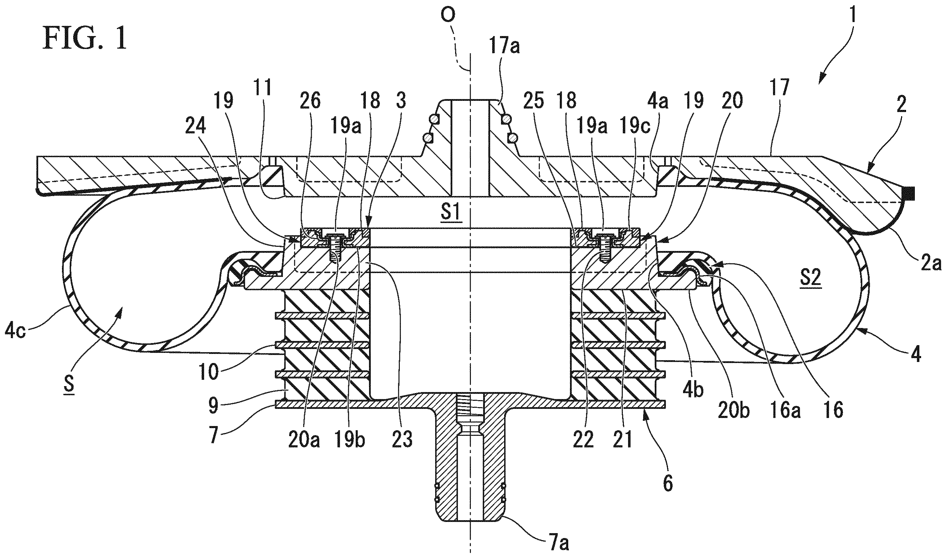

As shown in FIG. 1, the air spring device 1 is provided, for example, between a vehicle body and a truck, not shown, of a railway vehicle or the like. The air spring device 1 comprises an upper member 2 and a lower member 3; a tubular membrane member 4, in an interior of which a compressed gas is sealed at atmospheric pressure or higher, having openings 4a, 4b, at both ends, respectively coupled to the upper member 2 and lower member 3; and a tubular auxiliary elastic body 6 coupled to the lower member 3.

The upper member 2 and the lower member 3 respectively comprise contact portions 11, 18 that slidably contact each other when the tubular membrane member 4 is evacuated.

The central axes of the tubular membrane member 4 and the auxiliary elastic body 6 are positioned on a common axis.

Herebelow, this common axis will be referred to as the O axis, the side towards the upper member 2 in the O-axis direction will be referred to as the upper side and the side towards the lower member 3 will be referred to as the lower side. In plan view as seen from the O-axis direction, the direction orthogonal to the O axis will be referred to as the radial direction, and the direction around the O axis will be referred to as the circumferential direction.

The auxiliary elastic body 6 is composed of laminated rubber. The laminated rubber comprises a lower plate 7 arranged below the lower member 3, and annular rubber plates 9 and annular metal plates 10 arranged, in alternating fashion, in the O-axis direction, between the lower plate 7 and the lower member 3. The auxiliary elastic body 6 has a higher spring constant than the tubular membrane member 4 in both the O-axis direction and the radial direction.

The lower plate 7 is formed so as to be circular when viewed in the O-axis direction. The lower plate 7, the rubber plates 9 and the metal plates 10 are arranged so as to be coaxial with the O axis. The lower plate 7 and the metal plates 10 and rubber plates 9 are vulcanization-bonded to each other. The outer diameters of the lower plate 7 and the metal plates 10 are the same as each other. Of the plurality of rubber plates 9, the rubber plate 9 at the highest position is vulcanization-bonded to the lower member 3.

A communicating tube portion 7a that protrudes downward and is arranged coaxially with the O axis is formed on the lower plate 7. The inside of the communicating tube portion 7a provides communication across the entire length thereof in the O-axis direction. A female threaded portion is formed on the inner circumferential surface of the upper portion of the communicating tube portion 7a. A suspension bolt is screwed into this female threaded portion when the air spring device 1 is suspended. The inside of the communicating tube portion 7a is in communication with the inside of the auxiliary elastic body 6. The communicating tube portion 7a may, for example, be connected, in airtight fashion, to gas supply means or an auxiliary tank, not shown, for supplying and evacuating a gas such as air to and from the tubular membrane member 4.

The upper member 2 comprises a disc-shaped main plate portion 17 having an outer diameter larger than the outer diameter of the tubular membrane member 4, and a sliding sheet 2a that is provided on the outer circumference of the lower surface of the main plate portion 17. The main plate portion 17 is arranged to be coaxial with the O axis. At the radial central area of the main plate portion 17, a contact portion (hereinafter referred to as a projecting portion) 11 that projects towards the inside of the tubular membrane member 4 in the O-axis direction, in other words, downwards, is formed. The projecting portion 11 is formed in the shape of a flattened cylinder, and is arranged to be coaxial with the O axis. The main plate portion 17 is formed, for example, from a metal material such as an aluminum alloy. The sliding sheet 2a is formed, for example, from a resin material such as polyethylene.

The upper-end opening 4a of the tubular membrane member 4 is fitted, in air-tight fashion, over the outside of the projecting portion 11. Of the outer surface of the tubular membrane member 4, the part of the surface that faces upward is in slidable contact with the sliding sheet 2a. In the radial central area of the main plate portion 17, a pierced tube portion 17a that protrudes upwards and that is pierced in the O-axis direction is formed so as to allow communication between the interior and the exterior of the tubular membrane member 4. The upper end of the pierced tube portion 17a is, for example, connected, in airtight fashion, to the aforementioned gas supply means or auxiliary tank.

The projecting portion 11 on the upper member 2 faces, in the O-axis direction, the contact portions 18 on the lower member 3. The outer diameter of the projecting portion 11 is the same as the diameter of a circle passing through the outer circumferential edges of the contact portions 18 and centered on the O axis, or is slightly larger than the aforementioned diameter.

The lower member 3 comprises a plurality of contact portions 18, a plurality of holding portions 19 having the contact portions 18 attached to front surfaces 19c thereof, and a base portion 20 that supports the holding portions 19 from rear surfaces 19b thereof on the side opposite to the front surfaces 19c on which the contact portions 18 are attached. In the illustrated example, through holes 19a that penetrate through the holding portions 19 in the O-axis direction are formed in the holding portions 19. In the base portion 20, mounting holes 20a are formed at positions facing the through holes 19a in the holding portions 19. Furthermore, the holding portions 19 are fixed to the base portion 20 by inserting coupling shafts 22 integrally into the through holes 19a and the mounting holes 20a.

The contact portions 18 are formed from ultra-high-molecular-weight polyethylene or the like, having a molecular weight, for example, of about 2,000,000, and having better wear resistance than Teflon (registered trademark). The holding portions 19 are formed from a resin material or the like that is lighter than metal, for example, PA66 reinforced with glass fibers. The base portion 20 is formed, for example, from spherical graphite cast iron or the like. The molecular weight of the resin material forming the contact portions 18 is greater than the molecular weight of the resin material forming the holding portions 19. The contact portions 18 are formed from a resin material having a lower frictional coefficient than the resin material forming the holding portions 19.

The base portion 20 is formed in the shape of a bottomed cylinder having an annular bottom wall portion 21. A rubber plate 9 of the auxiliary elastic body 6 is vulcanization-bonded to the lower surface of the bottom wall portion 21. The base portion 20 is arranged so as to be coaxial with the O axis. A flange portion 20b that extends continuously around the entire circumference and protrudes radially outward is formed on the lower end of the base portion 20. The lower-end opening 4b of the tubular membrane member 4 is fitted, in air-tight fashion, over the outside of the base portion 20. A ridge portion that protrudes upward and extends around the entire circumference is formed on the outer circumferential edge of the flange portion 20b. An annular rubber seat 16 is provided on the flange portion 20b. The rubber seat 16 covers the upper surface and the outer circumferential surface of the flange potion 20b. A reinforcing metal fitting 16a that extends continuously around the entire circumference is embedded in the rubber seat 16. The reinforcing metal fitting 16a has, formed therein, a recessed groove into which the ridge portion of the flange portion 20b fits. The end of the tubular membrane member 4 towards the lower-end opening 4b is arranged above the rubber seat 16.

The tubular membrane member 4 is flexible, and is formed, for example, from an elastic material, preferably a rubber material. The inside of the tubular membrane member 4 is filled with a gas, for example, air. On the tubular membrane member 4, the middle section 4c positioned between the end openings 4a, 4b bulges radially outward. The middle section 4c bulges further radially outward than the flange portion 20b of the lower member 3. The middle section 4c contacts the flange portion 20b from above and from the radially outward side, via the rubber seat 16.

The projecting portion 11 of the upper member 2 and the contact portions 18 of the lower member 3 are separated in the O-axis direction and face each other in a filled state wherein the tubular membrane member 4 is filled with gas, as shown in FIG. 1. In this filled state, a filled space S is formed inside the tubular membrane member 4. The filled space S comprises a central space S1 positioned between the projecting portion 11 of the upper member 2 and the contact portions 18 of the lower member 3, and an outer peripheral space S2, located inside the tubular membrane member 4, extending over the entire circumference in the circumferential direction and connected to the central space S1 from the radially outward side. The projecting portion 11 of the upper member 2 and the contact portions 18 of the lower member 3 slidably contact each other in an evacuated state wherein the tubular membrane member 4 is evacuated.

Furthermore, in the present embodiment, the plurality of holding portions 19 are provided so as to be able to be respectively attached to and detached from the base portion 20. In the illustrated example, the mounting holes 20a formed in the base portion 20 have female threading, and the coupling shafts 22 have male threading allowing them to be detachably screwed into the mounting holes 20a.

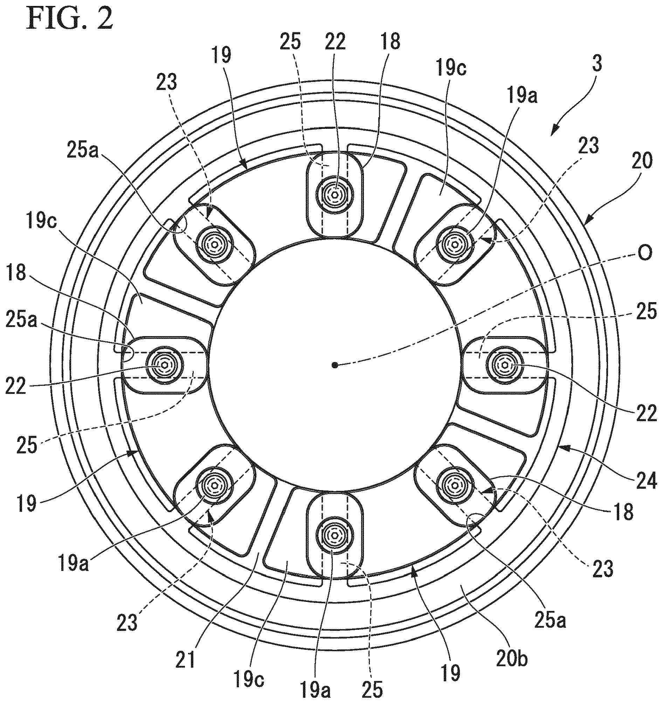

The base portion 20 has, formed thereon, a plurality of supporting protrusions 23 that protrude upwards from the bottom wall portion 21. The supporting protrusions 23 are formed by making the lower member 3 protrude towards the upper side, which is the side towards which the lower member 3 faces the upper member 2, in the O-axis direction. The supporting protrusions 23 are formed in the shape of rectangular plates. The supporting protrusions 23 extend in the radial direction. The front and rear surfaces of the supporting protrusions 23 face in the circumferential direction. A plurality of the supporting protrusions 23 are arranged, so as to be spaced in the circumferential direction, in a state wherein the front and rear surfaces of the supporting protrusions 23 face in the circumferential direction. As shown in FIG. 2, the plurality of supporting protrusions 23 are formed on the base portion 20 so as to be equidistantly spaced in the circumferential direction.

Of the side surfaces of the supporting protrusions 23, the outer side surfaces facing radially outward are connected to the circumferential wall portion 24 of the base portion 20, and the lower surfaces facing downward are connected to the bottom wall portion 21 of the base portion 20. Of the aforementioned side surfaces, the inner side surfaces facing radially inward are contiguous and flush with the inner circumferential edge of the bottom wall portion 21 of the base portion 20, and the radial outer ends of the upper surfaces 25 that face upward are contiguous and flush with the edges of the upper-end opening of the circumferential wall portion 24 of the base portion 20. On the upper surfaces 25 of the supporting protrusions 23, the inner sections, positioned radially inside of the radial outer ends, are recessed downward with respect to the radial outer ends, and the mounting holes 20a are formed in these inner sections. Step portions 25a facing radially inward are formed at the boundary sections between the aforementioned inner sections and the radial outer ends of the upper surfaces 25 of the supporting protrusions 23.

The holding portions 19 are formed in the shape of rectangular plates that are curved in the circumferential direction and that have front and rear surfaces facing in the O-axis direction. A plurality of the holding portions 19 are arranged on the base portion 20 in the circumferential direction. The plurality of holding portions 19 are arranged on the base portion 20 so as to be equidistantly spaced in the circumferential direction. Of the side surfaces of the holding portions 19, the outer surfaces that face radially outward contact the step portions 25a on the upper surface 25 of the base portion 20, and the inner surfaces that face radially inward, in plan view as seen from the O-axis direction, roughly coincide with the inner surfaces of the supporting protrusions 23 and the inner circumferential edge of the bottom wall portion 21 of the base portion 20. In the aforementioned plan view, the holding portions 19 are curved so as to be convex in the radially outward direction.

A single holding portion 19 is arranged so as to straddle a plurality of supporting protrusions 23. In the illustrated example, a single holding portion 19 is arranged so as to straddle two supporting protrusions 23, and the circumferential middle area between these two supporting protrusions 23 coincides with the circumferential middle area of the holding portion 19.

A plurality of through holes 19a are formed, so as to be spaced in the circumferential direction, in the holding portions 19. In the illustrated example, two through holes 19a are formed in a holding portion 19. These through holes 19a are respectively arranged on the holding portion 19 so as to be equidistantly spaced, in the circumferential direction, with respect to the circumferential middle area. The through holes 19a are arranged at the radial middle areas of the holding portions 19.

Tubular metal fittings 26 are embedded in the holding portions 19. The tubular metal fittings 26 are arranged so as to be coaxial with the through holes 19a.

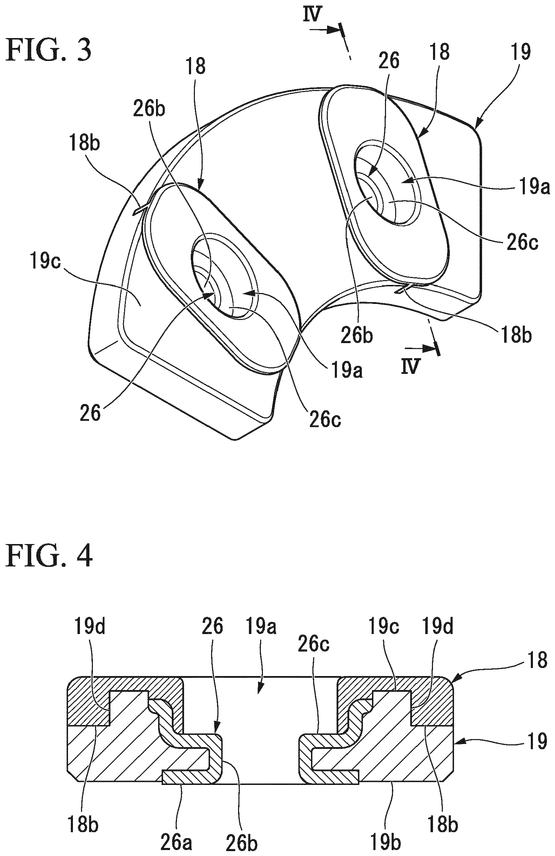

As shown in FIG. 4, the tubular metal fittings 26 comprise annular metal fittings 26a that contact the base portion 20 exposed at the circumferential edges of the openings of the through holes 19a on the rear surfaces 19b of the holding portions 19, connection tube portions 26b that extend upwards from the inner circumferential edges of the annular metal fittings 26a, and upper tube portions 26c that are in the shape of bottomed tubes having annular bottoms. The upper ends of the connection tube portions 26b are connected with the inner circumferential edges of the bottoms of the upper tube portions 26c.

The connection tube portions 26b and the upper tube portions 26c are exposed at the inner circumferential surfaces of the through holes 19a. The head portions of the coupling shafts 22 are placed on the bottoms of the upper tube portions 26c. The head portions of the coupling shafts 22 are positioned lower than the front surfaces 19c of the holding portions 19. Since the coupling shafts 22 contact the tubular metal fittings 26 without contacting the holding portions 19 that are formed from a resin material, the fastening force of the coupling shafts 22 with respect to the mounting holes 20a is maintained.

As shown in FIG. 2 and FIG. 3, a plurality of the contact portions 18 are formed on one holding portion 19. The contact portions 18 are provided at the circumferential edges of the openings of the through holes 19a on the front surfaces 19c of the holding portions 19. The contact portions 18 surround the entire circumferential edges of the openings. The contact portions 18 are provided so as to span entirely across the holding portions 19 in the radial direction. It is also possible to provide the contact portions 18 so as to span entirely across the holding portions 19 in the circumferential direction.

In the illustrated example, the contact portions 18, in plan view as seen from the O-axis direction, are formed in the shapes of rectangular plates that have long sides extending in the radial direction and short sides extending in the circumferential direction. The four corners of the rectangular shapes of the contact portions 18 are formed so as to have a rounded shape. The contact portions 18 are formed so as to be thinner than the holding portions 19. The circumferential dimensions of the contact portions 18 are larger than the circumferential dimensions of the supporting protrusions 23 on the base portion 20. The circumferential dimensions of the contact portions 18 are smaller than the distances between supporting protrusions 23 that are adjacent to each other in the circumferential direction.

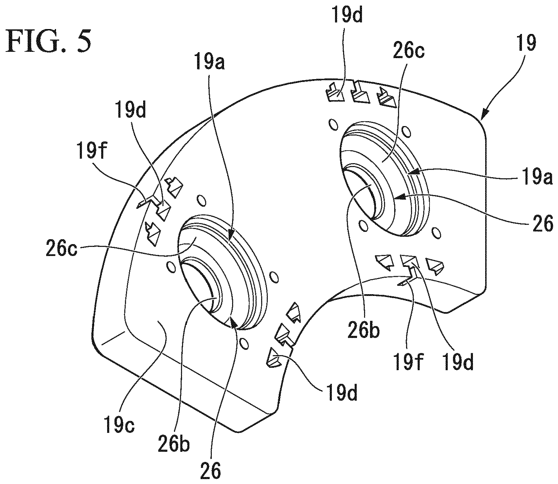

As shown in FIG. 4 and FIG. 5, a plurality of non-penetrating engaging recesses 19d are formed at the circumferential edges of the openings of the through-holes 19a on the front surfaces 19c of the holding portions 19. The engaging recesses 19d do not penetrate through the holding portions 19 in the O-axis direction. Engaged protrusions 18b that protrude downward from the contact portions 18 fill the engaging recesses 19d.

In the illustrated example, a plurality of engaging recesses 19d are formed, so as to be spaced in the circumferential direction, on the outer circumferential edges and the inner circumferential edges of the holding portions 19. The engaging recesses 19d are in the shape of rectangles in plan view.

Of the plurality of engaging recesses 19d formed on the outer circumferential edges of the holding portions 19, the engaging recesses 19d that are positioned in the circumferential middle areas open onto the outer circumferential surfaces of the holding portions 19, and the other engaging recesses 19d are closed with respect to the outer circumferential surfaces of the holding portions 19. Of the plurality of engaging recesses 19d formed on the inner circumferential edges of the holding portions 19, the engaging recesses 19d that are positioned in the circumferential middle areas open onto the inner circumferential surfaces of the holding portions 19, and the other engaging recesses 19d are closed with respect to the inner circumferential surfaces of the holding portions 19. The engaged protrusions 18b also integrally fill the openings 19f of the engaging recesses 19d on the outer circumferential surfaces and the inner circumferential surfaces of the holding portions 19.

The contact portions 18 may be formed, for example, by injecting a melted resin through the openings 19f of the engaging recesses 19d on the outer circumferential surfaces or the inner circumferential surfaces of the holding portions 19, using the holding portions 19 as inserts.

As explained above, according to the air spring device 1 of the present embodiment, a plurality of holding portions 19, to which contact portions 18 are attached, are provided so as to be able to be respectively attached to and detached from the base portion 20. Therefore, when any of the plurality of contact portions 18 are damaged, it is sufficient to remove from the base portion 20 and exchange only the holding portions 19, among the plurality of holding portions 19, on which the damaged contact portions 18 are provided. Thus, it is possible to continue using the undamaged contact portions 18, and the maintenance costs can be largely reduced.

A plurality of holding portions 19 are provided on the base portion 20 around the O axis. Therefore, when the tubular membrane member 4 is evacuated, the load of a vehicle can be supported by being spread, with little deviation, among the holding portions 19, thereby improving the durability of the air spring device 1.

A plurality of contact portions 18 are provided on one holding portion 19. Therefore, compared to the case in which a single contact portion 18 is provided over the entire front surface 19c of a single holding portion 19, it is possible to raise the contact pressure that is applied to each contact portion 18 when the tubular membrane member 4 is evacuated, thereby achieving excellent sliding properties.

Supporting protrusions 23, on which the holding portions 19 are provided, are formed on the base portion 20, and the entire rear surfaces 19b of the holding portions 19 are not in contact with the base portion 20. Therefore, the holding portions 19 can be firmly attached to the base portion 20 without looseness, even without finishing the parts of the base portion 20 and the holding portions 19 that come into contact with each other to a highly precise degree of flatness.

Since supporting protrusions 23 are formed on the base portion 20, it is possible to provide the base portion 20 with sufficient rigidity while limiting the weight of the base portion 20.

The contact portions 18 are provided so as to span entirely across the holding portions 19 in the radial direction. Therefore, when contact portions 18 that face each other in the O-axis direction slide into contact with each other when the tubular membrane member 4 is evacuated, it is possible to prevent situations in which the contact portions 18 become separated from the holding portions 19.

The coupling shafts 22 for fixing the holding portions 19 to the base portion 20 are inserted into the through holes 19a in the holding portions 19. Therefore, the circumferential edges of the openings of the through holes 19a in the holding portions 19 become parts where out-of-plane bending deformation will not tend to occur even if the load of the vehicle is applied to the holding portions 19 when the tubular membrane member 4 is evacuated. Additionally, since the contact portions 18 are provided at these parts, it is possible to prevent the contact portions 18 from breaking when the tubular membrane member 4 is evacuated.

Since the holding portions 19 are formed from a resin material, it is possible to limit the production cost and weight, while also allowing holding portions 19 of various shapes to be easily formed.

Annular metal fittings 26a that contact the base portion 20 are provided on the circumferential edges of the openings of the through holes 19a on the rear surfaces 19b of the holding portions 19. Therefore, the holding portions 19 can be firmly fixed to the base portion 20 even though the holding portions 19 are formed from a resin material.

The technical scope of the present invention is not to be construed as being limited to the aforementioned embodiment, and various modifications may be made within a range not departing from the scope of the claims of the present invention.

For example, the aforementioned embodiment was configured so that the contact portions 18, the holding portions 19 and the base portion 20 are provided on the lower member 3, but the contact portions 18, the holding portions 19 and the base portion 20 could be provided on the upper member 2.

In the aforementioned embodiment, the auxiliary elastic body 6 was formed from laminated rubber. However, in the present invention, it is possible to make appropriate modifications to other features in which the spring constants in the O-axis direction and the radial direction are higher than those of the tubular membrane member 4 having the filling space S filled with a gas.

The auxiliary elastic body 6 need not be provided.

The base portion 20 may be configured so that the element to which the auxiliary elastic body 6 is coupled and the element that supports the holding portions 19 are separate bodies.

While tubular metal fittings 26 were embedded in the holding portions 19, the tubular metal fittings 26 need not be provided.

The tubular metal fittings 26 may be configured so as to be provided with only annular metal fittings 26a.

The direction of arrangement of the plurality of holding portions 19 on the base portion 20 need not be in the circumferential direction, and may, for example, be appropriately changed so as to be in the radial direction or the like.

A single contact portion 18 may be provided over the entire front surface 19c of a single holding portion 19.

Instead of forming supporting protrusions 23 on the base portion 20, the entire rear surfaces 19b of the holding portions 19 may be made to contact the base portion 20. Just a single supporting protrusion 23 may be provided on a single holding portion 19.

The positions at which the contact portions 18 are provided on the surfaces 19c of the holding portions 19 need not be limited to those in the aforementioned embodiment. For example, the contact portions 18 may be provided at positions that are separated from the circumferential edges of the openings of the through holes 19a, or the contact portions 18 may be provided at positions that are separated, in the radial direction, from the outer circumferential edges and the inner circumferential edges.

The materials forming the aforementioned elements constituting the air spring device 1 need not be limited to those in the aforementioned embodiment, and may be appropriately changed.

Aside therefrom, the elements in the aforementioned embodiment may be appropriately replaced with well-known elements, or the aforementioned modification examples may be appropriately combined, within a range not departing from the scope of the claims of the present invention.

### [Industrial Applicability]

According to the air spring device of the present invention, it is possible to reduce maintenance costs.

### [Reference Signs List]

- 1: Air spring device
- 2: Upper member
- 3: Lower member
- 4: Tubular membrane member
- 4a, 4b: Opening
- 11: Projecting portion (contact portion)
- 18: Contact portion
- 19: Holding portion
- 19a: Through hole
- 19b: Rear surface of holding portion
- 19c: Front surface of holding portion
- 20: Base portion
- 20a: Mounting hole
- 22: Coupling shaft
- 23: Supporting protrusion
- 26a: Annular metal fitting

## Claims

1. An air spring device (1) comprising:
an upper member (2) and a lower member (3); and
a tubular membrane member (4), in an interior of which a compressed gas is sealed at atmospheric pressure or higher, having openings (4a, 4b), at both ends, respectively coupled to the upper (2) and lower members (3); **characterised in that**,
the upper member (2) and the lower member (3) respectively comprise contact portions (11, 18) that slidably contact each other when the tubular membrane member (4) is evacuated; and
at least one of the upper member (2) and the lower member (3) comprises:
a plurality of the contact portions (18);
a plurality of holding portions (19) having the contact portions (18) attached to the front surfaces (19c) thereof; and
a base portion (20) supporting the rear surfaces (19b) of the holding portions (19); wherein
the plurality of holding portions (19) are provided so as to be able to be respectively attached to and detached from the base portion (20).

2. The air spring device (1) according to claim 1, wherein a plurality of the holding portions (19) are provided on the base portion (20) around a central axis of the tubular membrane member (4).

3. The air spring device (1) according to claim 1 or 2, wherein a plurality of the contact portions (18) are provided on a single holding portion (19).

4. The air spring device (1) according to any one of claims 1 to 3, wherein
a plurality of supporting protrusions (23) are formed on the base portion (20) by the upper member (2) and the lower member (3) protruding in directions facing towards each other in the direction of the central axis of the tubular membrane member (4) ; and
the holding portions (19) are provided so as to straddle a plurality of the supporting protrusions (23).

5. The air spring device (1) according to any one of claims 1 to 4, wherein the contact portions (18) are provided so as to span entirely across the holding portions (19) in a radial direction orthogonal to the central axis of the tubular membrane member (4) as viewed from the direction of the central axis.

6. The air spring device (1) according to any one of claims 1 to 5, wherein
through holes (19a) that penetrate through the holding portions (19) in the direction of the central axis of the tubular membrane member (4) are formed in the holding portions (19);
mounting holes (20a) are formed on the base portion (20) at positions facing the through holes (19a);
the holding portions (19) are fixed to the base portion (20) by integrally inserting coupling shafts (22) into the through holes (19a) and the mounting holes (20a); and
the contact portions (18) are provided on circumferential edges of openings (4a, 4b) of the through holes (19a) on the front surfaces (19c) of the holding portions (19).

7. The air spring device (1) according to any one of claims 1 to 6, wherein
through holes (19a) that penetrate through the holding portions (19) in the direction of the central axis of the tubular membrane member (4) are formed in the holding portions (19);
mounting holes (20a) are formed on the base portion (20) at positions facing the through holes (19a);
the holding portions (19) are fixed to the base portion (20) by integrally inserting coupling shafts (22) into the through holes (19a) and the mounting holes (20a);
the holding portions (19) are formed from a resin material; and
annular metal fittings (26a) that contact the base portion (20) are provided on circumferential edges of openings (4a, 4b) of the through holes (19a) on the rear surfaces (19b) of the holding portions (19).

## Patentansprüche

1. Luftfedervorrichtung (1), die Folgendes umfasst:
ein oberes Element (2) und ein unteres Element (3) und
ein röhrenförmiges Membranelement (4), in dessen Innerem ein komprimiertes Gas bei atmosphärischem oder höherem Druck eingeschlossen ist, wobei es Öffnungen (4a, 4b) an beiden Enden aufweist, die jeweils mit dem oberen (2) beziehungsweise dem unteren Element (3) verbunden sind, **dadurch gekennzeichnet, dass**
das obere Element (2) und das untere Element (3) jeweils Berührungsabschnitte (11, 18) umfassen, die einander verschiebbar berühren, wenn das röhrenförmige Membranelement (4) entleert wird, und
wenigstens eines von dem oberen Element (2) und dem unteren Element (3) Folgendes umfasst:
mehrere Berührungsabschnitte (18),
mehrere Halteabschnitte (19), welche die Berührungsabschnitte (18) aufweisen, die an den vorderen Flächen (19c) derselben befestigt sind, und
einen Basisabschnitt (20), der die hinteren Flächen (19b) der Halteabschnitte (19) stützt, wobei
die mehreren Halteabschnitte (19) so bereitgestellt werden, dass sie dazu in der Lage sind, jeweils an dem Basisabschnitt (20) befestigt und von demselben gelöst zu werden.

2. Luftfedervorrichtung (1) nach Anspruch 1, wobei mehrere der Halteabschnitte (19) an dem Basisabschnitt (20) um eine Mittelachse des röhrenförmigen Membranelements (4) bereitgestellt werden.

3. Luftfedervorrichtung (1) nach Anspruch 1 oder 2, wobei mehrere der Berührungsabschnitte (18) an einem einzigen Halteabschnitt (19) bereitgestellt werden.

4. Luftfedervorrichtung (1) nach einem der Ansprüche 1 bis 3, wobei
mehrere Stützvorsprünge (23) an dem Basisabschnitt (20) durch das obere Element (2) und das untere Element (3) gebildet werden, die in Richtungen, die in der Richtung der Mittelachse des röhrenförmigen Membranelements (4) zueinander zeigen, vorspringen, und
die Halteabschnitte (19) so bereitgestellt werden, dass sie mehrere der Stützvorsprünge (23) überspannen.

5. Luftfedervorrichtung (1) nach einem der Ansprüche 1 bis 4, wobei die Berührungsabschnitte (18) so bereitgestellt werden, dass sie sich in einer radialen Richtung, senkrecht zu der Mittelachse des röhrenförmigen Membranelements (4), gesehen aus der Richtung der Mittelachse, vollständig über die Halteabschnitte (19) spannen.

6. Luftfedervorrichtung (1) nach einem der Ansprüche 1 bis 5, wobei
Durchgangslöcher (19a), die in der Richtung der Mittelachse des röhrenförmigen Membranelements (4) die Halteabschnitte (19) durchdringen, in den Halteabschnitten (19) geformt sind,
Anbringungslöcher (20a) an Positionen, die zu den Durchgangslöchern (19a) zeigen, an dem Basisabschnitt (20) geformt sind,
die Halteabschnitte (19) durch integrales Einsetzen von Kupplungsschäften (22) in die Durchgangslöcher (19a) und die Anbringungslöcher (20a) an dem Basisabschnitt (20) befestigt sind und
die Berührungsabschnitte (18) an umlaufenden Kanten von Öffnungen (4a, 4b) der Durchgangslöcher (19a) auf den vorderen Flächen (19c) der Halteabschnitte (19) bereitgestellt werden.

7. Luftfedervorrichtung (1) nach einem der Ansprüche 1 bis 6, wobei
Durchgangslöcher (19a), die in der Richtung der Mittelachse des röhrenförmigen Membranelements (4) die Halteabschnitte (19) durchdringen, in den Halteabschnitten (19) geformt sind,
Anbringungslöcher (20a) an Positionen, die zu den Durchgangslöchern (19a) zeigen, an dem Basisabschnitt (20) geformt sind,
die Halteabschnitte (19) durch integrales Einsetzen von Kupplungsschäften (22) in die Durchgangslöcher (19a) und die Anbringungslöcher (20a) an dem Basisabschnitt (20) befestigt sind,
die Halteabschnitte (19) aus einem Harzwerkstoff geformt sind und
ringförmige Metallarmaturen (26a), die den Basisabschnitt (20) berühren, an umlaufenden Kanten von Öffnungen (4a, 4b) der Durchgangslöcher (19a) auf den hinteren Flächen (19b) der Halteabschnitte (19) bereitgestellt werden.

## Revendications

1. Dispositif de ressort pneumatique (1), comprenant :
un élément supérieur (2) et un élément inférieur (3) ; et
un élément de membrane tubulaire (4), à l'intérieur duquel un gaz comprimé est scellé à une pression atmosphérique ou plus élevée, comportant des ouvertures (4a, 4b) au niveau des deux extrémités, accouplées respectivement aux éléments supérieur (2) et inférieur (3) ; **caractérisé en ce que** :
l'élément supérieur (2) et l'élément inférieur (3) comprennent respectivement des parties de contact (11, 18) se contactant respectivement de manière coulissante lorsque l'élément de membrane tubulaire (4) est évacué ; et
au moins un des éléments supérieur (2) et inférieur (3) comprend :
plusieurs parties de contact (18) ;
plusieurs parties de retenue (19) comportant les parties de contact (18) fixées sur leurs surfaces avant (19c) ; et
une partie de base (20) supportant les surfaces arrière (19b) des parties de retenue (19) ; dans lequel :
les plusieurs parties de retenue (19) sont configurées de sorte à pouvoir être respectivement fixées sur et détachées de la partie de base (20).

2. Dispositif de ressort pneumatique (1) selon la revendication 1, dans lequel plusieurs des parties de retenue (19) sont agencées sur la partie centrale (20) autour d'un axe central de l'élément de membrane tubulaire (4).

3. Dispositif de ressort pneumatique (1) selon les revendications 1 ou 2, dans lequel plusieurs des parties de contact (18) sont agencées sur une seule partie de retenue (19).

4. Dispositif de ressort pneumatique (1) selon l'une quelconque des revendications 1 à 3, dans lequel :
plusieurs saillies de support (23) sont formées sur la partie de base (20) par l'élément supérieur (2) et l'élément inférieur (3), faisant saillie dans des directions orientées l'une vers l'autre dans la direction de l'axe central de l'élément de membrane tubulaire (4) ; et
les parties de retenue (19) sont configurées de sorte à chevaucher plusieurs des saillies de support (23).

5. Dispositif de ressort pneumatique (1) selon l'une quelconque des revendications 1 à 4, dans lequel les parties de contact (18) sont configurées de sorte à s'étendre entièrement à travers les parties de retenue (19) dans une direction radiale orthogonale à l'axe central de l'élément de membrane tubulaire (4), vues à partir de la direction de l'axe central.

6. Dispositif de ressort pneumatique (1) selon l'une quelconque des revendications 1 à 5, dans lequel :
des trous de passage (19a) pénétrant à travers les parties de retenue (19) dans la direction de l'axe central de l'élément de membrane tubulaire (4) sont formés dans les parties de retenue (19) ;
des trous de montage (20a) sont formés sur la partie de base (20) au niveau de positions faisant face aux trous de passage (19a) ;
les parties de retenue (19) sont fixées sur la partie de base (20) par insertion intégrale d'arbres d'accouplement (22) dans les trous de passage (19a) et les trous de montage (20a) ; et
les parties de contact (18) sont agencées sur des bords circonférentiels des ouvertures (4a, 4b) des trous de passage (19a) sur les surfaces avant (19c) des parties de retenue (19).

7. Dispositif de ressort pneumatique (1) selon l'une quelconque des revendications 1 à 6, dans lequel :
des trous de passage (19a) pénétrant à travers les parties de retenue (19) dans la direction de l'axe central de l'élément de membrane tubulaire (4) sont formés dans les parties de retenue (19) ;
des trous de montage (20a) sont formés sur la partie de base (20) au niveau de positions faisant face aux trous de passage (19a) ;
les parties de retenue (19) sont fixées sur la partie de base (20) par insertion intégrale d'arbres d'accouplement (22) dans les trous de passage (19a) et les trous de montage (20a) ;
les parties de retenue (19) sont formées à partir d'un matériau de résine ; et
des raccords métalliques annulaires (26a) contactant la partie de base (20) sont agencés sur des bords circonférentiels des ouvertures (4a, 4b) des trous de passage (19a) sur les surfaces arrière (19b) des parties de retenue (19).
